# EUROPEAN PATENT APPLICATION

(11) **EP 4 342 720 A1**
(43) Date of publication of application: **27.03.2024**
(21) Application number: 22869400.6
(22) Date of filing: 16.09.2022
(51) Int. Cl.: B60L 53/16, B62D 25/24

(54) **CHARGING PORT DEVICE, OPENING AND CLOSING METHOD, AND VEHICLE**

(30) Priority: 16.09.2021 CN 202111087920
(71) Applicant: BYD Company Limited, Shenzhen, Guangdong 518118 (CN)
(72) Inventor: ZHANG, Canlin, Shenzhen Guangdong 518118 (CN); WANG, Xiangang, Shenzhen Guangdong 518118 (CN); LIU, Dongbin, Shenzhen Guangdong 518118 (CN); LIANG, Wei, Shenzhen Guangdong 518118 (CN)
(74) Representative: DehnsGermany Partnerschaft von Patentanwälten
(86) International application number: PCT/CN2022/119312
(87) International publication number: WO 2023/041034

(57) **Abstract**

A charging port device, an opening and closing method, and a vehicle are provided. The charging port device includes a charging port driver, a fast charging driver, a slow charging driver, a slow charging port cover, a fast charging port cover, an outer cover, and a mounting housing provided with a mounting hole. A fast charging port and a slow charging port are arranged in the mounting hole. An output terminal of the charging port driver is connected with the outer cover, and the outer cover is configured to cover the mounting hole. An output terminal of the fast charging driver is connected with the fast charging port cover, and the fast charging port cover is configured to cover the fast charging port. An output terminal of the slow charging driver is connected with the slow charging port cover, and the slow charging port cover is configured to cover the slow charging port.

## Description

### CROSS-REFERENCE TO RELATED APPLICATIONS

The present disclosure claims priority to Chinese Patent Application No. 202111087920.8, filed on September 16, 2021 and entitled "CHARGING PORT DEVICE, OPENING AND CLOSING METHOD, AND VEHICLE". The entire content of the above-referenced application is incorporated herein by reference.

### FIELD

The present disclosure relates to a charging port device, an opening and closing method, and a vehicle.

### BACKGROUND

In the related art, an electric vehicle is provided with a charging port and a charging port device covering the charging port. During charging of the electric vehicle, the charging port device needs to be turned on, and a charging gun is connected with the charging port to charge the charging port.

In the related art, when the user turns on the charging port device and selects a fast charging port or a slow charging port to charge the electric vehicle, the other charging port may be exposed to the environment, and rain and dust in the environment may inevitably enter the exposed charging port, which may affect the service life of the automobile charging port. Moreover, the charging port exposed to the environment has a safety risk of electric shock without touching by children.

### SUMMARY

The present disclosure solves the technical problems of water and dust entering when a charging port is exposed to the environment in the related art, and provides a charging port device, an opening and closing method, and a vehicle.

In view of the above problems, a charging port device provided in embodiments of the present disclosure includes a charging port driver, a fast charging driver, a slow charging driver, a slow charging port cover, a fast charging port cover, an outer cover, and a mounting housing provided with a mounting hole. A fast charging port and a slow charging port are arranged in the mounting hole. An output terminal of the charging port driver is connected with the outer cover, and the outer cover is configured to cover the mounting hole. An output terminal of the fast charging driver is connected with the fast charging port cover, and the fast charging port cover is configured to cover the fast charging port. An output terminal of the slow charging driver is connected with the slow charging port cover, and the slow charging port cover is configured to cover the slow charging port.

Optionally, the fast charging driver includes a fast charging motor, a fast charging gear, and a fast charging rotating shaft rotatably mounted to the mounting housing. The fast charging port cover is provided with fast charging meshing teeth adapted to the fast charging gear. An output terminal of the fast charging motor is connected with the fast charging rotating shaft. The fast charging gear is mounted to the fast charging rotating shaft. The fast charging gear is meshed with the fast charging meshing teeth.

Optionally, the slow charging driver includes a slow charging motor, a slow charging gear, and a slow charging rotating shaft rotatably mounted to the mounting housing. The slow charging port cover is provided with slow charging meshing teeth adapted to the slow charging gear. An output terminal of the slow charging motor is connected with the slow charging rotating shaft. The slow charging gear is mounted to the slow charging rotating shaft. The slow charging gear is meshed with the slow charging meshing teeth.

Optionally, the mounting housing is further provided with a fast charging chute. The fast charging port cover is a fast charging sliding cover, and the fast charging port cover is slidably mounted to the fast charging chute.

Optionally, the mounting housing is further provided with a slow charging chute. The slow charging port cover is a slow charging sliding cover; and the slow charging port cover is slidably mounted to the slow charging chute.

Optionally, the charging port driver includes a charging port motor and an adapter arm. One end of the adapter arm is connected with an output terminal of the charging port motor, and the other end of the adapter arm is connected with the outer cover.

Optionally, the mounting housing includes an upper housing and a lower housing. The upper housing is provided with a first engagement portion, and the lower housing is provided with a second engagement portion. The upper housing is connected with the lower housing through the first engagement portion and the second engagement portion that are engaged with each other, and the upper housing and the lower housing jointly define the mounting hole.

Optionally, the mounting housing further includes a decorative plate provided with a fast charging opening and a slow charging opening. The decorative plate is configured to cover an end of the fast charging port cover away from the fast charging port and an end of the slow charging port cover away from the slow charging port. The decorative plate is mounted to the mounting hole. The fast charging opening is in communication with the fast charging port, the slow charging opening is in communication with the slow charging port.

The decorative plate is provided with an annular sealing skirt, and a vehicle sheet metal is hermetically connected with a side of the annular sealing skirt away from the decorative plate.

Optionally, the charging port device further includes an annular sealing member. One end of the annular sealing member is connected with the mounting housing, and the other end of the annular sealing member is connected with an inner wall of the vehicle sheet metal.

Another embodiment of the present disclosure further provides an opening and closing method applied to the above charging port device, including:
receiving a cover opening instruction, driving the outer cover to expose the mounting hole through the charging port driver, driving the fast charging port cover to expose the fast charging port through the fast charging driver, and driving the slow charging port cover to expose the slow charging port through the slow charging driver;
driving the slow charging port cover to cover the slow charging port through the slow charging driver when the fast charging port is in a fast charging state; and
driving the fast charging port cover to cover the fast charging port through the fast charging driver when the slow charging port is in a slow charging state.

Optionally, the opening and closing method further includes:
receiving a cover closing instruction, driving the fast charging port cover to cover the fast charging port through the fast charging driver, driving the slow charging port cover to cover the slow charging port through the slow charging driver, and driving the outer cover to cover the mounting hole through the charging port driver.

Still another embodiment of the present disclosure further provides a vehicle, including the foregoing charging port device.

In the present disclosure, a fast charging port and a slow charging port are arranged in the mounting hole. An output terminal of the charging port driver is connected with the outer cover, and the outer cover is configured to cover the mounting hole. An output terminal of the fast charging driver is connected with the fast charging port cover, and the fast charging port cover is configured to cover the fast charging port. An output terminal of the slow charging driver is connected with the slow charging port cover, and the slow charging port cover is configured to cover the slow charging port. The charging port driver may drive the outer cover to cover or expose the mounting hole. The fast charging driver may drive the fast charging port cover to slide, so that the fast charging port cover covers or exposes the fast charging port. The slow charging driver may drive the slow charging port cover to slide, so that the slow charging port cover can cover or expose the slow charging port. The charging port driver, the fast charging driver, and the fast charging driver can remotely control actions thereof, so that the charging port device is easy to realize automation and intelligence, thereby improving user experience. In addition, when the fast charging port or the slow charging port is opened, the fast charging port cover is always connected with the fast charging driver, and the slow charging port cover is always connected with the slow charging driver, so that it is not necessary to remove the fast charging port cover from the fast charging port or remove the slow charging port cover from the slow charging port, thereby avoiding an accident of losing the fast charging port cover and the slow charging port cover.

Moreover, when a fast charging gun is inserted into the fast charging port, the slow charging driver automatically drives the slow charging port cover to cover the slow charging port. When a slow charging gun is inserted into the slow charging port, the fast charging driver automatically drives the fast charging port cover to cover the fast charging port. In this way, neither the fast charging port nor the slow charging port is to be exposed to the environment during the vehicle charging, thereby preventing external rain, dust, and the like from entering the fast charging port or the slow charging port and extending the service life of the charging port device. In addition, this also avoids safety accidents caused by accidentally touching the exposed fast charging port or slow charging port by people.

### BRIEF DESCRIPTION OF THE DRAWINGS

The present disclosure is further described below with reference to the accompanying drawings and embodiments.
FIG. 1 is a front view of a charging port device according to an embodiment of the present disclosure when being closed;
FIG. 2 is a front view of a charging port device according to an embodiment of the present disclosure when being opened;
FIG. 3 is a front view of a fast charging port of a charging port device according to an embodiment of the present disclosure during charging;
FIG. 4 is a front view of a slow charging port of a charging port device according to an embodiment of the present disclosure during charging;
FIG. 5 is a schematic structural diagram of a charging port device according to an embodiment of the present disclosure;
FIG. 6 is a front view of a charging port device according to an embodiment of the present disclosure with a fast charging port cover being closed, a slow charging port cover being closed, and an outer cover being opened;
FIG. 7 is a cross-sectional view taken along line A-A in FIG. 6;
FIG. 8 is a cross-sectional view taken along line B-B in FIG. 6;
FIG. 9 is a partial schematic structural diagram of a charging port device according to an embodiment of the present disclosure;
FIG. 10 is a partial schematic structural diagram of a charging port device according to an embodiment of the present disclosure;
FIG. 11 is a partial enlarged view of C in FIG. 10;
FIG. 12 is a schematic structural diagram of a fast charging port cover of a charging port device according to an embodiment of the present disclosure; and
FIG. 13 is a schematic diagram of a method for opening and closing a charging port device according to an embodiment of the present disclosure.

The reference numerals in the specification are as follows.

1. Charging port driver; 11. Charging port motor; 12. Adapter arm; 2. Fast charging driver; 21. Fast charging motor; 22. Fast charging gear; 23. Fast charging rotating shaft; 3. Slow charging driver; 31. Slow charging motor; 32. Slow charging gear; 33. Slow charging rotating shaft; 4. Slow charging port cover; 5. Fast charging port cover; 51. Fast charging meshing teeth; 6. Outer cover; 7. Mounting housing; 71. Mounting hole; 72. fast charging chute; 73. slow charging chute; 74. Upper housing; 741. First engagement portion; 75. Lower housing; 751. Second engagement portion; 76. Decorative plate; 761. Fast charging opening; 762. Slow charging opening; 8. Fast charging port; 9. Slow charging port; 10. Annular sealing skirt; 101. Vehicle sheet metal; 102. Annular sealing member.

### DETAILED DESCRIPTION

To make the technical problems solved by the present disclosure, technical solutions, and beneficial effects more comprehensible, the following further describes the present disclosure in detail with reference to the accompanying drawings and embodiments. It should be understood that, the specific embodiments described herein are merely used for explaining the present disclosure rather than being used for limiting the present disclosure.

It should be understood that orientation or position relationships indicated by the terms such as "up", "down", "left", "right", "front", "back", and "middle" are based on orientation or position relationships shown in the accompanying drawings, and are used only for ease of description of the present disclosure and brevity of the description, rather than indicating or implying that the mentioned apparatus or element need to have a particular orientation or be constructed and operated in a particular orientation. Therefore, such terms should not be construed as a limitation on the present disclosure.

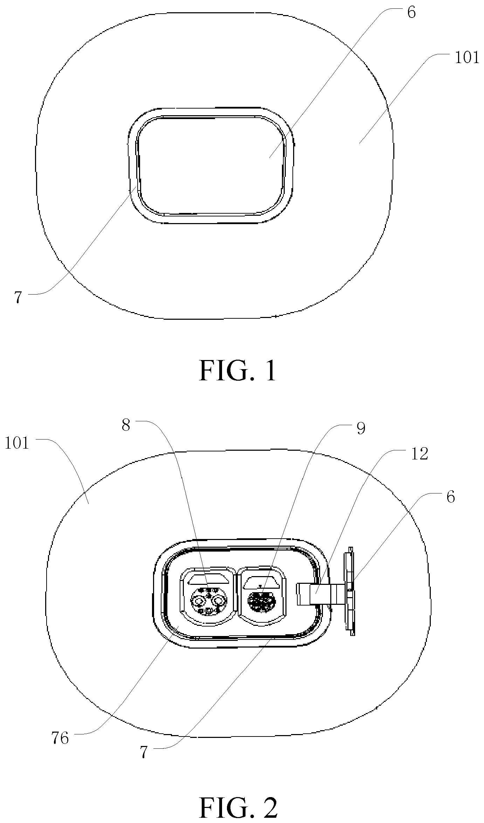

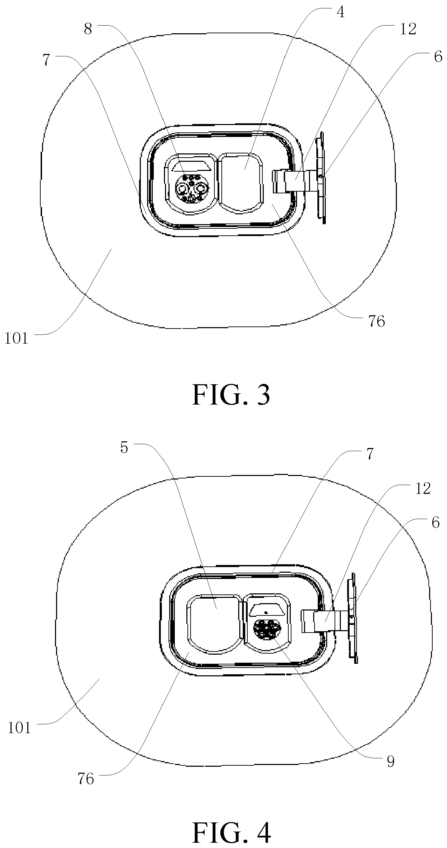

As shown in FIG. 1 to FIG. 5, an embodiment of the present disclosure provides a charging port device, including a charging port driver 1, a fast charging driver 2, a slow charging driver 3, a slow charging port cover 4, a fast charging port cover 5, an outer cover 6, and a mounting housing 7 provided with a mounting hole 71. A fast charging port 8 and a slow charging port 9 are arranged in the mounting hole 71. An output terminal of the charging port driver 1 is connected with the outer cover 6, and the outer cover 6 is configured to cover the mounting hole 71. An output terminal of the fast charging driver 2 is connected with the fast charging port cover 5, and the fast charging port cover 5 is configured to cover the fast charging port 8. An output terminal of the slow charging driver 3 is connected with the slow charging port cover 4, and the slow charging port cover 4 is configured to cover the slow charging port 9. It may be understood that the fast charging port 8 and the slow charging port 9 are arranged in the mounting hole 71 side by side, and the fast charging port 8 and the slow charging port 9 are both charged with a power battery of a vehicle. It should be noted that when a fast charging gun is inserted into the fast charging port 8, the fast charging gun performs fast charging on the power battery of the vehicle through the fast charging port 8. When a slow charging gun is inserted into the slow charging port 9, the slow charging gun performs slow charging on the power battery of the vehicle through the slow charging port 9.

Specifically, the charging port driver 1, the fast charging driver 2, and the slow charging driver 3 are all mounted to the mounting housing 7, and the mounting hole 71 has an open structure. When the outer cover 6 covers the mounting hole 71, the fast charging driver 2, the slow charging driver 3, the slow charging port cover 4, and the fast charging port cover 5 are all hidden in the mounting hole 71.

In the present disclosure, a fast charging port 8 and a slow charging port 9 are arranged in the mounting hole 71. An output terminal of the charging port driver 1 is connected with the outer cover 6, and the outer cover 6 is configured to cover the mounting hole 71. An output terminal of the fast charging driver 2 is connected with the fast charging port cover 5, and the fast charging port cover 5 is configured to cover the fast charging port 8. An output terminal of the slow charging driver 3 is connected with the slow charging port cover 4, and the slow charging port cover 4 is configured to cover the slow charging port 9. The charging port driver 1 may drive the outer cover 6 to cover or expose the mounting hole 71. The fast charging driver 2 may drive the fast charging port cover 5 to slide, so that the fast charging port cover 5 covers or exposes the fast charging port 8. The slow charging driver 3 may drive the slow charging port cover 4 to slide, so that the slow charging port cover 4 can cover or expose the slow charging port 9. The charging port driver 1, the fast charging driver 2, and the slow charging driver 3 can remotely control actions thereof, so that the charging port device is easy to realize automation and intelligence, thereby improving user experience. In addition, when the fast charging port 8 or the slow charging port 9 is opened, the fast charging port cover 5 is always connected with the fast charging driver 2, and the slow charging port cover 4 is always connected with the slow charging driver 3, so that it is not necessary to remove the fast charging port cover 5 from the fast charging port 8 or remove the slow charging port cover 4 from the slow charging port 9, thereby avoiding an accident of losing the fast charging port cover 5 and the slow charging port cover 4.

Moreover, when a fast charging gun is inserted into the fast charging port, the slow charging driver 3 automatically drives the slow charging port cover 4 to cover the slow charging port 9. When a slow charging gun is inserted into the slow charging port, the fast charging driver 2 automatically drives the fast charging port cover 5 to cover the fast charging port 8. In this way, neither the fast charging port 8 nor the slow charging port 9 is to be exposed to the environment during the vehicle charging, thereby preventing external rain, dust, and the like from entering the fast charging port 8 or the slow charging port 9 and extending the service life of the charging port device. In addition, this also avoids safety accidents caused by accidentally touching the exposed fast charging port 8 or slow charging port 9 by people.

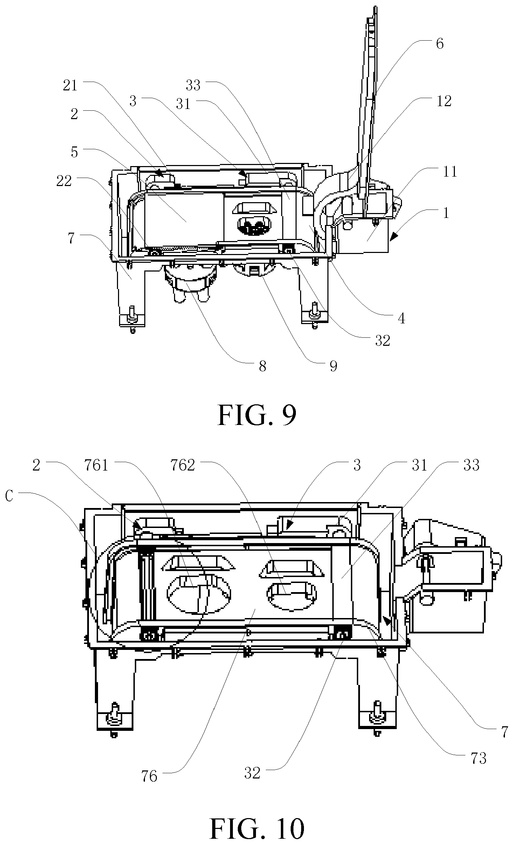

In an embodiment, as shown in FIG. 10 to FIG. 12, the fast charging driver 2 includes a fast charging motor 21, a fast charging gear 22, and a fast charging rotating shaft 23 rotatably mounted to the mounting housing 7. The fast charging port cover 5 is provided with fast charging meshing teeth 51 adapted to the fast charging gear 22. An output terminal of the fast charging motor 21 is connected with the fast charging rotating shaft 23. The fast charging gear 22 is mounted to the fast charging rotating shaft 23. The fast charging gear 22 is meshed with the fast charging meshing teeth 51. It may be understood that the fast charging port cover 5 may be made of a flexible material (such as a rubber material), and the fast charging meshing teeth 51 are elongated teeth. Specifically, the fast charging motor 21 drives the fast charging rotating shaft 23 to rotate, and the fast charging rotating shaft 23 drives the fast charging port cover 5 to slide through the fast charging gear 22 and the fast charging meshing teeth 51 that are meshed with each other, so that the fast charging port cover 5 can realize the function of closing or opening the fast charging port 8. In this embodiment, the charging port device is simple in structure and low in manufacturing cost.

In a specific embodiment, two opposite sides of the fast charging port cover 5 are both provided with the fast charging meshing teeth 51, and two opposite ends of the fast charging rotating shaft 23 are both provided with the fast charging gear 22. The fast charging rotating shaft 23 drives the fast charging port cover 5 to slide through two pairs of the fast charging gear 22 and the fast charging meshing teeth 51 that are meshed with each other, thereby improving the stability of the fast charging driver 2 driving the fast charging port cover 5 to slide.

In an embodiment, as shown in FIG. 9 and FIG. 10, the slow charging driver 3 includes a slow charging motor 31, a slow charging gear 32, and a slow charging rotating shaft 33 rotatably mounted to the mounting housing 7. The slow charging port cover 4 is provided with slow charging meshing teeth (not shown) adapted to the slow charging gear 32. An output terminal of the slow charging motor 31 is connected with the slow charging rotating shaft 33. The slow charging gear 32 is mounted to the slow charging rotating shaft 33. The slow charging gear 32 is meshed with the slow charging meshing teeth. It may be understood that the slow charging port cover 4 may be made of a flexible material (such as a rubber material), and the slow charging meshing teeth are elongated teeth. Specifically, the slow charging motor 31 drives the fast charging rotating shaft 23 to rotate, and the slow charging rotating shaft 33 drives the slow charging port cover 4 to slide through the slow charging gear 32 and the slow charging meshing teeth that are meshed with each other, so that the slow charging port cover 4 can realize the function of closing or opening the slow charging port 9. In this embodiment, the charging port device is simple in structure and low in manufacturing cost.

In a specific embodiment, two opposite sides of the slow charging port cover 4 are both provided with the slow charging meshing teeth, and two opposite ends of the slow charging rotating shaft 33 are both provided with the slow charging gear 32. The slow charging rotating shaft 33 drives the slow charging port cover 4 to slide through two pairs of the slow charging gear 32 and the slow charging meshing teeth that are meshed with each other, thereby improving the stability of the slow charging driver 3 driving the slow charging port cover 4 to slide.

Further, the fast charging port 8 and the slow charging port 9 are arranged side by side, and the fast charging rotating shaft 23 and the slow charging rotating shaft 33 are arranged in parallel.

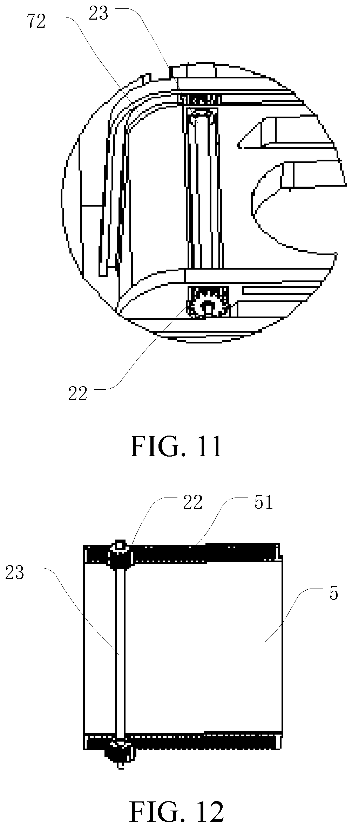

In an embodiment, as shown in FIG. 10 and FIG. 11, the mounting housing 7 is further provided with a fast charging chute 72, and the fast charging port cover 5 is slidably mounted to the fast charging chute 72. In a specific embodiment, one end of the fast charging port cover 5 is wound around the fast charging rotating shaft 23, and the other end of the fast charging port cover 5 is slidably connected to the fast charging chute 72. The fast charging driver 2 drives the fast charging port cover 5 to rotate in the fast charging chute, so that the fast charging port cover 5 covers or exposes the fast charging port 8. In another specific embodiment, the fast charging chute 72 is a bent channel, and the fast charging port cover 5 is slidably connected to the fast charging chute 72. In this embodiment, in an axial direction of the fast charging rotating shaft 23, two opposite sides of the fast charging port cover 5 are both inserted into the fast charging chute 72, thereby improving the stability of the fast charging driver 2 driving the fast charging port cover 5 to slide, and the charging port device is compact in structure.

In an embodiment, as shown in FIG. 1, the mounting housing 7 is further provided with a slow charging chute 73, and the slow charging port cover 4 is slidably mounted to the slow charging chute 73. In a specific embodiment, one end of the slow charging port cover 4 is wound around the slow charging rotating shaft 33, and the other end of the slow charging port cover 4 is slidably connected to the slow charging chute 73. The slow charging driver 3 drives the slow charging port cover 4 to rotate in the slow charging chute, so that the slow charging port cover 4 covers or exposes the slow charging port 9. In another specific embodiment, the slow charging chute 73 is a bent channel, and the slow charging port cover 4 is slidably connected to the slow charging chute 73. In this embodiment, in an axial direction of the slow charging rotating shaft 33, two opposite sides of the slow charging port cover 4 are both inserted into the slow charging chute 73, thereby improving the stability of the slow charging driver 3 driving the slow charging port cover 4 to slide, and the charging port device is compact in structure.

Further, the fast charging chute 72 is in communication with the slow charging chute 73, that is, the fast charging chute 72 and the slow charging chute 73 have the same structure, thereby reducing the manufacturing cost of the charging port device.

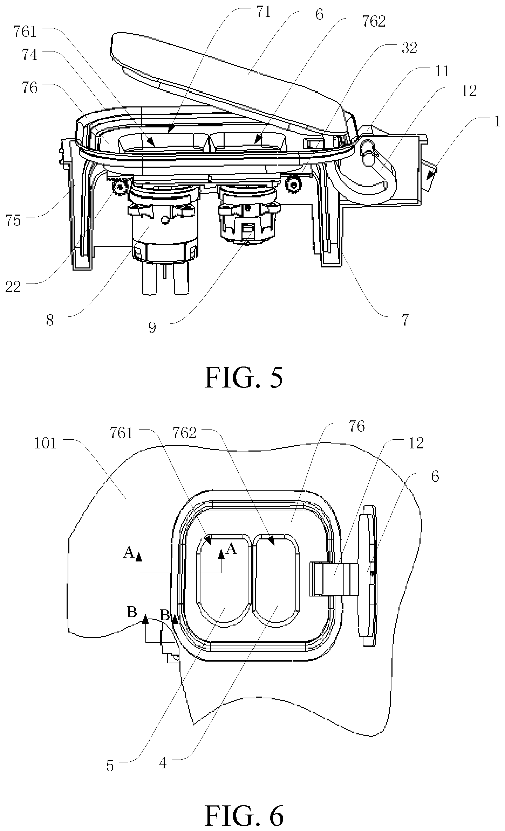

In an embodiment, as shown in FIG. 5, the charging port driver 1 includes a charging port motor 11 and an adapter arm 12. One end of the adapter arm 12 is connected with an output terminal of the charging port motor 11, and the other end of the adapter arm 12 is connected with the outer cover 6. It may be understood that the charging port motor 11 is mounted to an outer wall of the mounting housing 7, and the charging port motor 11 drives the outer cover 6 to rotate through the adapter arm 12, so that the outer cover 6 can cover or expose the mounting hole 71. In this embodiment, the charging port driver 1 is simple in structure and low in manufacturing cost.

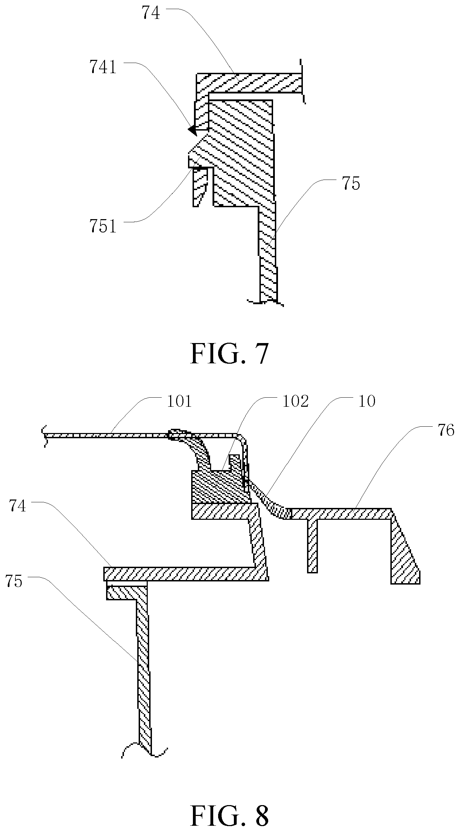

In an embodiment, as shown in FIG. 6 and FIG. 7, the mounting housing 7 includes an upper housing 74 and a lower housing 75. The upper housing 74 is provided with a first engagement portion 741. The lower housing 75 is provided with a second engagement portion 751. The upper housing 74 is connected with the lower housing 75 through the first engagement portion 741 and the second engagement portion 751 that are engaged with each other, and the mounting hole 71 is formed between the upper housing 74 and the lower housing 75. The upper housing 74 and the lower housing 75 are assembled together to define the mounting hole 71. In a specific embodiment, as shown in FIG. 7, the first engagement portion 741 may be an engagement groove, and the second engagement portion 751 may be an engagement block adapted to the engagement groove. In another specific embodiment, the second engagement portion 751 may be an engagement groove, and the first engagement portion 741 may be an engagement block adapted to the engagement groove. Specifically, after the first engagement portion 741 and the second engagement portion 751 are engaged with each other, the upper housing 74 and the lower housing 75 are fastened by fasteners such as screws and bolts, and a layer of sealant is coated at the joint of the upper housing 74 and the lower housing 75 to ensure the sealing between the upper housing 74 and the lower housing 75. In this embodiment, the mounting housing 7 is simple in structure, low in manufacturing cost, and easy to mount.

In an embodiment, as shown in FIG. 6 and FIG. 8, the mounting housing 7 further includes a decorative plate 76 provided with a fast charging opening 761 and a slow charging opening 762. The decorative plate 76 is configured to cover an end of the fast charging port cover 5 away from the fast charging port 8 and an end of the slow charging port cover 4 away from the slow charging port 9. The decorative plate 76 is mounted to the mounting hole 71, the fast charging opening 761 is in communication with the fast charging port 8, and the slow charging opening 762 is in communication with the slow charging port 9. It may be understood that, the decorative plate 76 may be mounted at the opening of the upper housing 74 when the decorative plate 76 may hide the fast charging driver 2, the slow charging driver 3, the slow charging port cover 4, and the fast charging port cover 5 in the mounting hole 71. In addition, the fast charging opening 761 on the decorative plate 76 exactly faces the fast charging port 8, and the slow charging opening 762 exactly faces the slow charging port 9, so that when the outer cover 6 is removed from the mounting hole 71, the user can only see the fast charging port 8 and the slow charging port 9, but cannot see other structural members, which improves aesthetics of the charging port device.

The decorative plate 76 is provided with an annular sealing skirt 10, and a vehicle sheet metal 101 is hermetically connected with a side of the annular sealing skirt 10 away from the decorative plate 76. It may be understood that the annular sealing skirt 10 may be made of flexible sealing rubber, and the outer cover 6 may compress and cover the annular sealing skirt 10 in the mounting hole 71. Specifically, water droplets on the vehicle sheet metal 101 may enter the mounting hole 71 along the annular sealing skirt 10, and the charging port device is provided with a drainage hole in communication with the mounting hole 71, so that the water droplets in the mounting hole 71 may be discharged along the drainage hole, thereby avoiding the accident of corroding the vehicle sheet metal 101 due to the water droplets on the vehicle sheet metal 101 entering the interior of the vehicle sheet metal 101 through a connecting gap between the vehicle sheet metal 101 and an outer housing.

In an embodiment, as shown in FIG. 6 and FIG. 8, the charging port device further includes an annular sealing member 102. One end of the annular sealing member 102 is connected with the mounting housing 7, and the other end of the annular sealing member 102 is connected with an inner wall of the vehicle sheet metal 101. Further, the annular sealing member 102 includes a seal body, a compression sealing portion and an abutment sealing portion both connected to the seal body. The compression sealing portion is arranged between the vehicle sheet metal 101 and the mounting housing 7, and the abutment sealing portion abuts against the inner wall of the vehicle sheet metal 101. It may be understood that the annular sealing member 102 may function as a double-layer seal, and the compression sealing portion may block water droplets and the like outside the vehicle sheet metal 101. Even if water droplets and the like enter the gap between the upper housing 74 and the vehicle sheet metal 101, the abutment sealing portion may prevent water droplets from entering the interior of the vehicle sheet metal 101, thereby avoiding the accident of corroding the vehicle sheet metal 101 due to the water droplets on the vehicle sheet metal 101 entering the interior of the vehicle sheet metal 101 through a connecting gap between the vehicle sheet metal 101 and an outer housing.

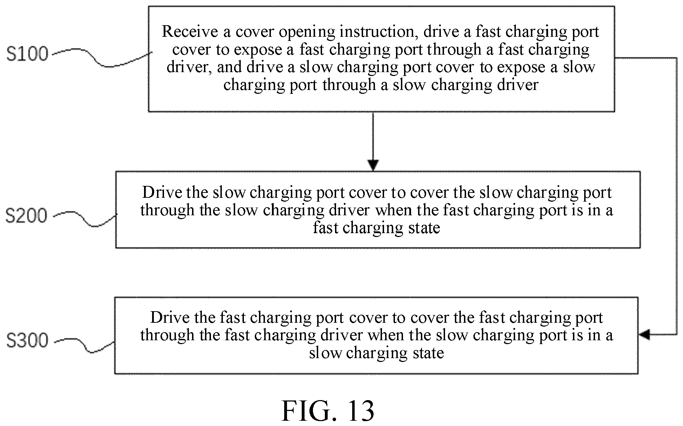

As shown in FIG. 13, another embodiment of the present disclosure further provides an opening and closing method applied to the above charging port device, including the following steps.

S 100: A cover opening instruction is received, the outer cover 6 is driven to expose the mounting hole 71 through the charging port driver 1, the fast charging port cover 5 is driven to expose the fast charging port 8 through the fast charging driver 2, and the slow charging port cover 4 is driven to expose the slow charging port 9 through the slow charging driver 3. It may be understood that the cover opening instruction may be an instruction generated by a user pressing a cover opening button on a remote controller.

Specifically, after a vehicle controller receives the cover opening instruction, the vehicle controller drives the outer cover 6 to expose the mounting hole 71 through the charging port driver 1, drives the fast charging port cover 5 to expose the fast charging port 8 through the fast charging driver 2, and drives the slow charging port cover 4 to expose the slow charging port 9 through the slow charging driver 3, so that the fast charging port 8 and the slow charging port 9 are both in an opened state. That is, the user may select the fast charging port 8 and the slow charging port 9 for charging based on actual needs.

S200: The slow charging port cover 4 is driven to cover the slow charging port 9 through the slow charging driver 3 when the fast charging port 8 is in a fast charging state. It may be understood that when the user inserts a fast charging gun into the fast charging port 8 to perform fast charging on a power battery of a vehicle, the slow charging driver 3 automatically drives the slow charging port cover 4 to cover the opened slow charging port 9.

S300: The fast charging port cover 5 is driven to cover the fast charging port 8 through the fast charging driver 2 when the slow charging port 9 is in a slow charging state. It may be understood that when the user inserts a slow charging gun into the slow charging port 9 to perform slow charging on a power battery of a vehicle, the fast charging driver 2 automatically drives the fast charging port cover 5 to cover the opened fast charging port 8.

In the present disclosure, step S 100 is first performed. When the fast charging gun is inserted into the fast charging port, step S200 is performed, and the slow charging driver 3 automatically drives the slow charging port cover 4 to cover the slow charging port 9. When a slow charging gun is inserted into the slow charging port, step S300 is performed, and the fast charging driver 2 automatically drives the fast charging port cover 5 to cover the fast charging port 8. In this way, neither the fast charging port 8 nor the slow charging port 9 is to be exposed to the environment during the vehicle charging, thereby preventing external rain, dust, and the like from entering the fast charging port 8 or the slow charging port 9 and extending the service life of the charging port device. In addition, this also avoids safety accidents caused by accidentally touching the exposed fast charging port 8 or slow charging port 9 by people. When the mounting hole 71 is opened by the outer cover 6, the fast charging port 8 and the slow charging port 9 are both in an opened state, which is convenient for the user to select the fast charging port 8 and the slow charging port 9.

In an embodiment, the opening and closing method further includes:
receiving a cover closing instruction, driving the fast charging port cover 5 to cover the fast charging port 8 through the fast charging driver 2, driving the slow charging port cover 4 to cover the slow charging port 9 through the slow charging driver 3, and driving the outer cover 6 to cover the mounting hole 71 through the charging port driver 1. It may be understood that the cover closing instruction may be an instruction generated by a user pressing a closing button on a remote controller. In this embodiment, after the charging port device receives the cover closing instruction, the fast charging port cover 5 covers the fast charging port 8, the slow charging port cover 4 covers the slow charging port 9, and the outer cover 6 covers the mounting hole 71, thereby ensuring the sealing and aesthetics of the charging port device, facilitating user operation, and improving user experience.

Specifically, the cover opening instruction may be an instruction generated by pressing the closing button on the remote controller after the user pulls out the fast charging gun from the fast charging port 8 (that is, after charging of the power battery of the vehicle is completed), or may be an instruction generated by pressing the closing button on the remote controller after the user pulls out the slow charging gun from the slow charging port 9 (that is, after charging of the power battery of the vehicle is completed), and may further be an instruction generated by pressing the closing button on the remote controller after the user drives the outer cover 6.

Still another embodiment of the present disclosure further provides a vehicle, including the foregoing charging port device.

The foregoing descriptions are merely preferred embodiments of the present disclosure, but are not intended to limit the present disclosure. Any modification, equivalent replacement, or improvement made within the spirit and principle of the present disclosure shall fall within the protection scope of the present disclosure.

## Claims

1. A charging port device, comprising a fast charging driver (2), a slow charging driver (3), a slow charging port cover (4), a fast charging port cover (5), and a mounting housing (7), the mounting housing (7) being provided with a mounting hole (71);
a fast charging port (8) and a slow charging port (9) being arranged in the mounting hole (71);
an output terminal of the fast charging driver (2) being connected with the fast charging port cover (5), and the fast charging port cover (5) being configured to cover the fast charging port (8); and
an output terminal of the slow charging driver (3) being connected with the slow charging port cover (4), and the slow charging port cover (4) being configured to cover the slow charging port (9).

2. The charging port device according to claim 1, wherein the fast charging driver (2) comprises a fast charging motor (21), a fast charging gear (22), and a fast charging rotating shaft (23); the fast charging rotating shaft (23) is rotatably mounted to the mounting housing (7); the fast charging port cover (5) is provided with fast charging meshing teeth (51); the fast charging meshing teeth (51) are adapted to the fast charging gear (22); an output terminal of the fast charging motor (21) is connected with the fast charging rotating shaft (23); the fast charging gear (22) is mounted to the fast charging rotating shaft (23); and the fast charging gear (22) is meshed with the fast charging meshing teeth (51); and/or
the slow charging driver (3) comprises a slow charging motor (31), a slow charging gear (32), and a slow charging rotating shaft (33); the slow charging rotating shaft (33) is rotatably mounted to the mounting housing (7); the slow charging port cover (4) is provided with slow charging meshing teeth; the slow charging meshing teeth are adapted to the slow charging gear (32); an output terminal of the slow charging motor (31) is connected with the slow charging rotating shaft (33); the slow charging gear (32) is mounted to the slow charging rotating shaft (33); and the slow charging gear (32) is meshed with the slow charging meshing teeth.

3. The charging port device according to claim 1 or 2, wherein the mounting housing (7) is further provided with a fast charging chute (72); the fast charging port cover (5) is a fast charging sliding cover; the fast charging port cover (5) is slidably mounted to the fast charging chute (72); and/or
the mounting housing (7) is further provided with a slow charging chute (73); the slow charging port cover (4) is a slow charging sliding cover; and the slow charging port cover (4) is slidably mounted to the slow charging chute (73).

4. The charging port device according to any of claims 1 to 3, further comprising a charging port driver (1) and an outer cover (6), an output terminal of the charging port driver (1) being connected with the outer cover (6), and the outer cover (6) being configured to cover the mounting hole (71).

5. The charging port device according to any of claims 1 to 4, wherein the charging port driver (1) comprises a charging port motor (11) and an adapter arm (12); one end of the adapter arm (12) is connected with an output terminal of the charging port motor (11); and the other end of the adapter arm (12) is connected with the outer cover (6).

6. The charging port device according to any of claims 1 to 5, wherein the mounting housing (7) comprises an upper housing (74) and a lower housing (75); the upper housing (74) is provided with a first engagement portion (741); the lower housing (75) is provided with a second engagement portion (751); the upper housing (74) is connected with the lower housing (75) through the first engagement portion (741) and the second engagement portion (751) that are engaged with each other; and the upper housing (74) and the lower housing (75) jointly define the mounting hole (71).

7. The charging port device according to any of claims 1 to 6, wherein the mounting housing (7) further comprises a decorative plate (76); the decorative plate (76) is provided with a fast charging opening (761) and a slow charging opening (762); the decorative plate (76) is configured to cover an end of the fast charging port cover (5) away from the fast charging port (8) and an end of the slow charging port cover (4) away from the slow charging port (9); the decorative plate (76) is mounted to the mounting hole (71); the fast charging opening (761) is in communication with the fast charging port (8); the slow charging opening (762) is in communication with the slow charging port (9);
the decorative plate (76) is provided with an annular sealing skirt (10); and a vehicle sheet metal (101) is hermetically connected with a side of the annular sealing skirt (10) away from the decorative plate (76).

8. The charging port device according to any of claims 1 to 7, further comprising an annular sealing member (102), one end of the annular sealing member (102) being connected with the mounting housing (7), and the other end of the annular sealing member (102) being connected with an inner wall of the vehicle sheet metal (101).

9. A method for opening/closing the charging port device according to any of claims 1 to 8, comprising:
receiving a cover opening instruction, driving the fast charging port cover (5) to expose the fast charging port (8) through the fast charging driver (2), and driving the slow charging port cover (4) to expose the slow charging port (9) through the slow charging driver (3);
driving the slow charging port cover (4) to cover the slow charging port (9) through the slow charging driver (3) when the fast charging port (8) is in a fast charging state; and
driving the fast charging port cover (5) to cover the fast charging port (8) through the fast charging driver (2) when the slow charging port (9) is in a slow charging state.

10. The opening and closing method according to claim 9, wherein before the driving the fast charging port cover (5) to expose the fast charging port (8) through the fast charging driver (2), the method further comprises:
driving the outer cover (6) to expose the mounting hole (71) through the charging port driver (1).

11. The opening and closing method according to claim 9 or 10, further comprising:
receiving a cover closing instruction, driving the fast charging port cover (5) to cover the fast charging port (8) through the fast charging driver (2), driving the slow charging port cover (4) to cover the slow charging port (9) through the slow charging driver (3), and driving the outer cover (6) to cover the mounting hole (71) through the charging port driver (1).

12. A vehicle, comprising the charging port device according to any of claims 1 to 8.
